# EUROPÄISCHE PATENTSCHRIFT

(11) **EP 3 815 802 B1**
(45) Veröffentlichungstag und Bekanntmachung des Hinweises auf die Patenterteilung: **31.08.2022**
(21) Anmeldenummer: 19206660.3
(22) Anmeldetag: 31.10.2019
(51) Int. Cl.: B08B 5/02, B08B 17/06, B05B 1/00, G02B 27/00, B05B 1/20

(54) **RAHMENANORDNUNG ZUM ABWEISEN VON PARTIKELN VON EINER OBERFLÄCHE EINES GEHÄUSEFUNKTIONSELEMENTS**
FRAME ARRANGEMENT FOR REMOVING PARTICLES FROM A SURFACE OF A HOUSING FUNCTIONAL ELEMENT
DISPOSITIF DE CADRE PERMETTANT DE DÉVIER DES PARTICULES DE LA SURFACE D'UN ÉLÉMENT FONCTIONNEL DE BOITIER

(43) Veröffentlichungstag der Anmeldung: 05.05.2021
(73) Patentinhaber: VITRONIC Dr.-Ing. Stein Bildverarbeitungssysteme GmbH, 65189 Wiesbaden (DE)
(72) Erfinder: SIBER, Ralf, 55118 Mainz (DE)
(74) Vertreter: Neumann Müller Oberwalleney Patentanwälte PartG mbB

(56) Entgegenhaltungen:
- WO-A2-2008/144016
- US-A1- 2018 003 958

## Beschreibung

Die Erfindung betrifft eine Rahmenanordnung zum Abweisen von Partikeln von einer Oberfläche eines Gehäusefunktionselements, insbesondere für Gehäuse von Verkehrsüberwachungsanlagen .

Gehäuseanordnungen weisen häufig Funktionsflächen auf, denen neben der sekundären Funktion das Gehäuseinnere vor Umwelteinflüssen, wie Feuchtigkeit und Staub, zu schützen eine primäre Funktion zugeordnet ist. Bei Gehäuseanordnungen für Verkehrsüberwachungsanlagen kann diese primäre Funktion in der Verringerung von Störungen der Signalstrecke zwischen einem Sensor und einem durch den Sensor zu erfassenden Objekt liegen. So werden beispielsweise zwischen Kameras von Verkehrsüberwachungsanlagen und den durch die Kamera aufzunehmenden Fahrzeugen als Gehäusefunktionselement Glasscheiben vorgesehen. Für Radarsensoren können Gehäusefunktionselemente aus einem Kunststoff mit geringer Dämpfung der Radarstrahlung vorgesehen sein.

Um die Störungen auf der Signalstrecke zwischen dem Sensor und dem durch den Sensor zu erfassenden Objekt zu verringern, können Gehäuseanordnungen Reinigungsanordnung der Gehäusefunktionselemente vorsehen, die diese beispielsweise von Feuchtigkeit und Staub freihalten.

Aus der WO 2008/144016 A9 ist eine Reinigungsanordnung für eine Fernsehkamera bekannt. Die Reinigungsanordnung umfasst einen ringförmigen Gehäuseabschnitt der Kamera, der eine Linse umgibt und eine Vielzahl von Löchern, die gleichmäßig über dem Umfang verteilt sind, aufweist. Die Löcher sind jeweils über eine Leitung mit einer Luftversorgungseinheit verbunden, sodass Druckluft unter Hochdruck von einem Kompressor durch die Löcher gefördert werden kann. Durch den resultierenden Luftstrom werden Verunreinigung, wie Regen oder Staub, von der Linse abgehalten.

Aus der DE 10 2018 105 420 A1 ist eine Reinigungsvorrichtung für ein zylinderförmig ausgebildetes Sensorgehäuse mit einem als Fenster ausgestalteten Gehäusefunktionselement bekannt. Das Sensorgehäuse wird von einem Sensorarm gestützt, sodass zwischen dem Sensorgehäuse und dem Sensorarm ein ringförmiger Luftauslass gebildet ist, der konzentrisch zu dem Sensorgehäuse angeordnet ist. Über einen in dem Sensorarm vorgesehenen Lüfter kann der ringförmige Luftauslass mit Druckluft versorgt werden, sodass die Druckluft im Wesentlichen parallel zu dem zylinderförmigen Gehäusefunktionselement an diesem vorbeiströmen kann und somit Verunreinigung, wie Regen oder Staub, von dem Fenster abgehalten werden.

Die US 2018/003958 A1 offenbart eine Rahmenanordnung entsprechend dem Oberbegriff des Anspruchs 1.

Hiervon ausgehend liegt der vorliegenden Erfindung die Aufgabe zugrunde, eine Rahmenanordnung, insbesondere für Gehäuse von Verkehrsüberwachungsanlagen, bereitzustellen, die effizient ein Freihalten von polygonen Gehäusefunktionselementen von Verunreinigung ermöglicht. Eine weitere Aufgabe ist die Bereitstellung einer Gehäuseanordnung mit einer derartigen Rahmenanordnung.

Die Aufgabe wird durch eine erfindungsgemäße Rahmenanordnung zum Abweisen von Partikeln von einer Oberfläche eines Gehäusefunktionselements, insbesondere für Gehäuse von Verkehrsüberwachungsanlagen, gelöst, umfassend: mehrere einen Rahmen bildende Schenkel, die in Form eines Vielecks mit geschlossenem Streckenzug angeordnet sind und eine Öffnung umschließen, ein Gehäusefunktionselement, das von dem Rahmen umschlossen ist, und je Schenkel einen nach innen gerichteten Luftauslassschlitz, wobei eine Schlitzweite zumindest eines der Schenkel von der Mitte hin zu beiden Enden des Schenkels abnimmt.

Bei polygonen Gehäusefunktionselementen schneiden sich an mehreren Stellen zwei Kanten des Gehäusefunktionselements unter einem Winkel. Luftauslässe von Anordnungen für das Abweisen von Partikeln von Gehäusefunktionselementen, die im Bereich der Schnittpunkte der beiden Kanten angeordnet sind, geben Luftströmungen ab, die ebenfalls unter einem Winkel aufeinandertreffen. Durch die so erhöhte Luftmenge kommt es zu ungewollten Verwirbelungen im Bereich der Schnittpunkte der beiden Kanten. Diese Verwirbelungen vermindern die Qualität des erzielten Ergebnisses in zumindest diesen Teilbereichen der Gehäusefunktionselemente. Die erfindungsgemäße Rahmenanordnung weist für polygone Gehäusefunktionselemente den Vorteil auf, dass durch die verminderte Schlitzweite der Luftauslassschlitze im Bereich der Enden einer Kante eines Gehäusefunktionselementes bzw. der Schenkel des Rahmens die Verwirbelungen im Bereich des Schnittpunkts zweier Schenkel verringert und somit die Qualität des erzielten Ergebnisses für die Gehäusefunktionselemente erhöht wird.

Das Gehäusefunktionselement kann eine rechteckige Außenkontur aufweisen und eben ausgestaltet sein. In einer weiteren möglichen Ausgestaltung kann das Gehäusefunktionselement eine viereckige Außenkontur aufweisen und gekrümmt ausgestaltet sein, wobei zwei parallele Kanten des Gehäusefunktionselements gerade sind und zwei weitere Kanten des Gehäusefunktionselements eine Krümmung, insbesondere eine konstante Krümmung, aufweisen.

Das Gehäusefunktionselement kann eine Glasfläche sein, oder das Gehäusefunktionselement kann eine Abdeckung aus einem Kunststoff sein. Der Einsatz von Glasflächen als Gehäusefunktionselement kommt bei Verkehrsüberwachungsanlagen insbesondere vor Fotosensoren oder Belichtungsanlagen in Betracht. Abdeckungen aus Kunststoff hingegen können beispielsweise vor Radarsensoren eingesetzt werden.

In einer möglichen Ausgestaltung können die Luftauslassschlitze jeweils eine Schlitzweite in Abhängigkeit ihres Abstands von einer Mitte des jeweiligen Schenkels aufweisen. Hierdurch erhöht sich eine lokale Drosselwirkung der Luftauslassschlitze von der Mitte des jeweiligen Schenkel zu dessen Enden. Die die Abhängigkeit der Schlitzweite von dem Abstand beschreibende Funktion kann dabei insbesondere stetig oder als Sprungfunktion definiert sein. Die beschreibende Funktion kann insbesondere abhängig von den weiteren geometrischen Größen der Rahmenanordnung und/oder einem angestrebten Ausströmdruck in den Auslassschlitzen sein.

Die Luftauslassschlitze können an einer äußeren Funktionsseite des Gehäusefunktionselements angeordnet sein. Als äußere Funktionsseite des Gehäusefunktionselements soll dabei die Seite verstanden werden, die der Umwelt zugewandt ist, während als innere Funktionsseite des Gehäusefunktionselements die Seite verstanden werden soll, die in Richtung des Inneren der Gehäuseanordnung gerichtet ist.

Die Luftauslassschlitze können entlang der jeweiligen Schenkel in Teilschlitze aufgeteilt sein. Hierbei können die Luftauslassschlitze durch ein oder mehrere Stege in Teilschlitze aufgeteilt sein. Die Teilschlitze können jeweils an einem Ende eines Luftleitkanals angeordnet sein.

In einer Ausgestaltung bei der das Gehäusefunktionselement eine viereckige Außenkontur aufweist und gekrümmt ausgestaltet ist, wobei zwei parallele Kanten des Gehäusefunktionselements gerade sind und zwei weitere Kanten des Gehäusefunktionselements eine Krümmung aufweisen, können die Luftauslassschlitze jeweils der zwei Schenkel des Rahmens, die den gekrümmten Kanten des Gehäusefunktionselements zugeordnet sind, der Krümmung der jeweils zugeordneten Kante folgen.

Der Luftleitkanal kann zumindest teilweise durch zwei Luftleitelemente, insbesondere Luftleitrippen, begrenzt sein. Zumindest eine Teilzahl der Luftleitelemente kann in den Rahmen integriert sein. Darüber hinaus ist es auch denkbar, dass zumindest eine Teilzahl der Luftleitelemente in Eckabschnitten des Rahmens integriert ist. In die Luftleitelemente können insbesondere die Stege, die die Luftauslassschlitze in Teilschlitze aufteilen, integriert sein.

Die Luftleitelemente können quer zu einer die Öffnung begrenzenden Fläche des Rahmens ausgerichtet sein. Hierbei können die Luftleitelemente in einem Winkel zu der die Öffnung begrenzenden Fläche des Rahmens angeordnet sein. Der Winkel kann dabei abhängig vom Abstand des jeweiligen Luftleitelementes von der Mitte des jeweiligen Schenkels sein. Es wird somit erreicht, dass durch die Luftleitschlitze austretende Druckluft von den Luftleitelementen in Richtung eines Mittenbereichs des Gehäusefunktionselements geleitet wird. Insbesondere überlagern sich im Bereich der Schnittpunkte der Kanten des Gehäusefunktionselements die Strömungsvektoren zu einem Gesamtvektor in Richtung des Mittenbereichs. Hierdurch werden wiederum Turbulenzen im Bereich der Schnittpunkte der Kanten der Gehäusefunktionselemente verringert und es wird eine maximale Abschirmleistung auch in den Eckenbereichen gewährleistet.

Der Luftleitkanal kann zumindest teilweise durch eine Abdeckungsanordnung begrenzt sein. Zumindest eine Teilzahl der Luftleitelemente kann in die Abdeckungsanordnung integriert sein.

Der Rahmen kann an zumindest einem Schenkel einen Reinigungsschlitz aufweisen, wobei der Reinigungsschlitz an einer inneren Funktionsseite des Gehäusefunktionselements angeordnet ist. Der Reinigungsschlitz kann dabei ein oder mehrere der zuvor erläuterten Merkmale der Luftauslassschlitze analog aufweisen. Durch den Reinigungsschlitz kann Druckluft gefördert werden, sodass Verunreinigung von der inneren Funktionsseite des Gehäusefunktionselements entfernt werden können und die Gehäusefunktionselemente auf der inneren Funktionsseite insbesondere beschlagfrei gehalten werden können.

Die Aufgabe wird darüber hinaus durch eine Gehäuseanordnung, insbesondere für Verkehrsüberwachungsanlagen, gelöst, umfassend: eine Rahmenanordnung nach einer der zuvor beschriebenen Ausgestaltungen, ein Gehäuse, in das die Rahmenanordnung eingesetzt ist, und eine Luftversorgungseinheit, mittels der Druckluft durch die Luftauslassschlitze der Rahmenanordnung förderbar ist.

Die Gehäuseanordnung weist die zuvor genannten Vorteile der Rahmenanordnung analog auf, sodass an dieser Stelle zur Vermeidung von Wiederholungen auf die voranstehenden diesbezüglichen Erläuterungen verwiesen wird.

Die Druckluft kann dabei in einer möglichen Ausführungsform mit einem Überdruckniveau von maximal 1 bar durch die Luftauslassschlitze gefördert werden

In einer möglichen Ausführungsform der Gehäuseanordnung können die Luftauslassschlitze entlang der jeweiligen Schenkel in Teilschlitze aufgeteilt sein, wobei die Teilschlitze jeweils an einem Ende eines Luftleitkanals angeordnet sind, und jeweils einer der Luftleitkanäle kann zwischen einem der Luftauslassschlitze und der Luftversorgungseinheit angeordnet sein, wobei der Luftleitkanal, insbesondere über eine Kühlstrecke, mit der Luftversorgungseinheit pneumatische verbunden ist. Auf der Kühlstrecke kann die Druckluft Wärme der Gehäuseanordnung aufnehmen. Bei Austritt aus einem von den Auslassschlitzen oder den Reinigungsschlitzen ist die Druckluft somit wärmer als eine Temperatur der die Gehäuseanordnung umgebenden Luft.

In einer weiteren möglichen Ausführungsform der Gehäuseanordnung kann die Rahmenanordnung reversibel lösbar von dem restlichen Gehäuse ausgestaltet sein, oder die Rahmenanordnung kann in das restliche Gehäuse integriert sein.

Nachfolgend werden bevorzugte Ausführungsformen anhand der Zeichnungsfiguren erläutert. Hierin zeigt
- Figur 1: eine Verkehrsüberwachungsanlage mit vier verschiedenen Ausführungsformen einer erfindungsgemäßen Rahmenanordnung in einer perspektivischen Ansicht;
- Figur 2: die Verkehrsüberwachungsanlage aus Figur 1, wobei schematisch resultierende Luftströmung eingezeichnet sind;
- Figur 3: eine Simulation der Luftströmung vor der ersten bis dritten Rahmenanordnung der Verkehrsüberwachungsanlage aus Figur 1;
- Figur 4: schematisch die erste Rahmenanordnung der Verkehrsüberwachungsanlage aus Figur 1 in einer Explosionsdarstellung;
- Figur 5: schematisch die zweite Rahmenanordnung der Verkehrsüberwachungsanlage aus Figur 1 in einer Explosionsdarstellung;
- Figur 6: die Rahmenanordnung aus Figur 5 in einer Draufsicht mit ausgeblendeten Gehäuseelementen und ausgeblendeter Gehäusewandung;
- Figur 7: die Rahmenanordnung aus Figur 5 in einer Schnittansicht entlang der Schnittlinie VII -VII aus Figur 6;
- Figur 7a: eine vergrößerte Darstellung der Einzelheit Z aus Figur 7;
- Figur 8: schematisch die vierte Rahmenanordnung der Verkehrsüberwachungsanlage aus Figur 1 in einer Explosionsdarstellung;
- Figur 9: eine Draufsicht der vierten Rahmenanordnung der Verkehrsüberwachungsanlage aus Figur 1;
- Figur 10: die vierte Rahmenanordnung der Verkehrsüberwachungsanlage aus Figur 1 in einer Schnittansicht entlang der Schnittlinie X bis X aus Figur 9; und
- Figur 11: die vierte Rahmenanordnung der Verkehrsüberwachungsanlage aus Figur 1 in einer Schnittansicht entlang der Schnittlinie XI bis XI aus Figur 9.

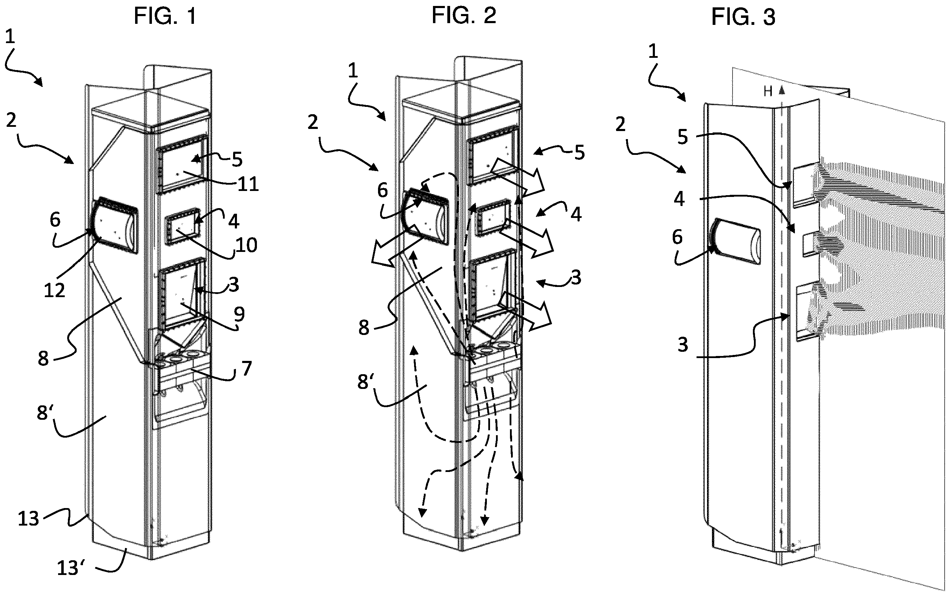

In Figur 1 ist eine Verkehrsüberwachungsanlage 1 dargestellt. Die Verkehrsüberwachungsanlage 1 umfasst ein teilweise transparent dargestelltes Gehäuse 2, in dem eine erste Rahmenanordnung 3, eine zweite Rahmenanordnung 4, eine dritte Rahmenanordnung 5 und eine vierte Rahmenanordnung 6 aufgenommen sind, die jeweils erfindungsgemäß ausgestaltet sind. Das Gehäuse 2 ist im vorliegenden Fall im Wesentlichen quaderförmig ausgeführt. Es ist allerdings auch denkbar, dass das Gehäuse in einer anderen Form, insbesondere im Wesentlichen zylinderförmig, ausgestaltet ist.

Die zweite Rahmenanordnung 4 und die dritte Rahmenanordnung 5 weisen jeweils ein ebenes, rechteckiges Gehäusefunktionselement 10, 11 auf, das als Fenster in Form einer Glasscheibe gestaltet ist und parallel zu einer äußeren Gehäusewandung 13 des Gehäuses 2 angeordnet ist. Die äußere Gehäusewandung 13 kann auch als Strahlungs- oder Wärmeschutz ausgeführt sein. Die erste Rahmenanordnung 3 weist ebenfalls ein ebenes, rechteckiges Gehäusefunktionselement 9 auf, das als Fenster in Form einer Glasscheibe ausgestaltet ist. Das Gehäusefunktionselement 9 ist dabei in einem Winkel zu der äußeren Gehäusewandung 13 des Gehäuses 2 angeordnet. Die vierte Rahmenanordnung 6 weist ein gekrümmtes, rechteckiges Gehäusefunktionselement 12 auf, das als Fenster in Form einer Glasscheibe gestaltet ist. Das Gehäusefunktionselement 12 weist zwei parallele Kanten auf, die gerade sind und zwei weitere Kanten, die gekrümmt sind. Die Krümmung ist dabei insbesondere konstant. Mit anderen Worten ist das Gehäusefunktionselement 12 in Form eines Hohlzylindersegmentes ausgestaltet.

Hinter den Gehäusefunktionselementen 9, 10, 11, 12 können beispielsweise Sensoren, wie Fotosensoren oder Radarsensoren, sowie Belichtungseinheiten angeordnet sein.

Die Verkehrsüberwachungsanlage 1 umfasst zudem eine Luftversorgungseinheit 7, die innenliegend am Gehäuse 2 angeordnet ist und Luft von außerhalb des Gehäuses 2 ansaugen kann. Die Luftversorgungseinheit 7 weist vorliegend sechs einzelne Lüfter auf, von denen jeweils die Hälfte einen ersten Teil des Gehäuses 2, im vorliegenden Fall einen oberen Teil, und einen zweiten Teil des Gehäuses 2, im vorliegenden Fall einen unteren Teil, belüfteten. In Figur 1 sind die vier Rahmenanordnungen 3, 4, 5, 6 in dem ersten Teil des Gehäuses 2 aufgenommen, wobei es grundsätzlich auch denkbar ist, dass diese entweder nur in dem zweiten Teil des Gehäuses 2 oder sowohl in dem ersten Teil als auch in dem zweiten Teil des Gehäuses 2 aufgenommen sind. Das Gehäuse 2 ist zumindest in Teilbereichen doppelwandig, sodass in dem ersten Teil des Gehäuses 2 zwischen einer äußeren Gehäusewandung 13 und einer inneren Gehäusewandung 13' ein Lufttransportraum 8 und in dem zweiten Teil des Gehäuses 2 zwischen den beiden Gehäusewandungen 13,13' ein Lufttransportraum 8' ausgebildet ist. Die innere Gehäusewandung 13' kann auch als Grundgehäuse bezeichnet werden. Die Rahmenanordnungen 3, 4, 5, 6 sind mit dem Lufttransportraum 8 pneumatisch verbunden.

Figur 2 zeigt schematisch die resultierende Luftströmung innerhalb des Gehäuses 2, insbesondere innerhalb der Lufttransporträume 8 und 8', wobei die Luftströmung innerhalb des Gehäuses 2 durch gestrichelte Pfeile angedeutet sind. Es ist zu erkennen, dass der von der Luftversorgungseinheit 7 in den ersten Teil des Gehäuses 2 beziehungsweise in den Lufttransportraum 8 eingebrachte Luftstrom an die vier Rahmenanordnungen 3, 4, 5, 6 übertragen wird und dort austritt. Die austretenden Luftströmung aus den vier Rahmenanordnungen 3, 4, 5, 6 sind durch geschlossene Pfeile symbolisiert. Der Lufttransportraum 8 dient somit als pneumatische Versorgungstrecke der vier Rahmenanordnungen 3, 4, 5, 6. Zudem nimmt der Luftstrom im Lufttransportraum 8 in der Verkehrsüberwachungsanlage 1 generierte Wärme auf, sodass der Lufttransportraum auch als Kühlstrecke dient. Die aus der Umgebung angesaugte Luft wird erwärmt, und kann somit nach dem Austritt aus den Rahmenanordnungen 3, 4, 5, 6 auf den Gehäusefunktionselementen 9, 10, 11, 12 niedergeschlagenen Feuchtigkeit verbessert aufnehmen.

In Figur 3 sind für die Rahmenanordnungen 3, 4, 5 die Ergebnisse einer Strömungssimulation in einer Symmetrieebene der Verkehrsüberwachungsanlage 1 dargestellt. Hierbei sind Bereiche mit hohen Strömungsgeschwindigkeiten vor den Rahmenanordnungen 3, 4, 5 dunkel schraffiert dargestellt. Es ergibt sich jeweils vor den Rahmenanordnungen 3, 4, 5 ein Luftstrom, der vor der gesamten Fläche der jeweiligen Gehäusefunktionselemente 9, 10, 11 wirkt. Es ist zudem zu erkennen, dass die jeweiligen Luftströme vor den Rahmenanordnungen 3, 4, 5 ein Wirkzentrum aufweisen, das in Überdeckung mit einem Mittenbereich der Fläche der jeweiligen Gehäusefunktionselemente 9, 10, 11 angeordnet ist. Die Ergebnisse einer Strömungssimulation für die Rahmenanordnung 6 führen zu analogen Ergebnissen, sodass an dieser Stelle auf eine Darstellung verzichtet wird.

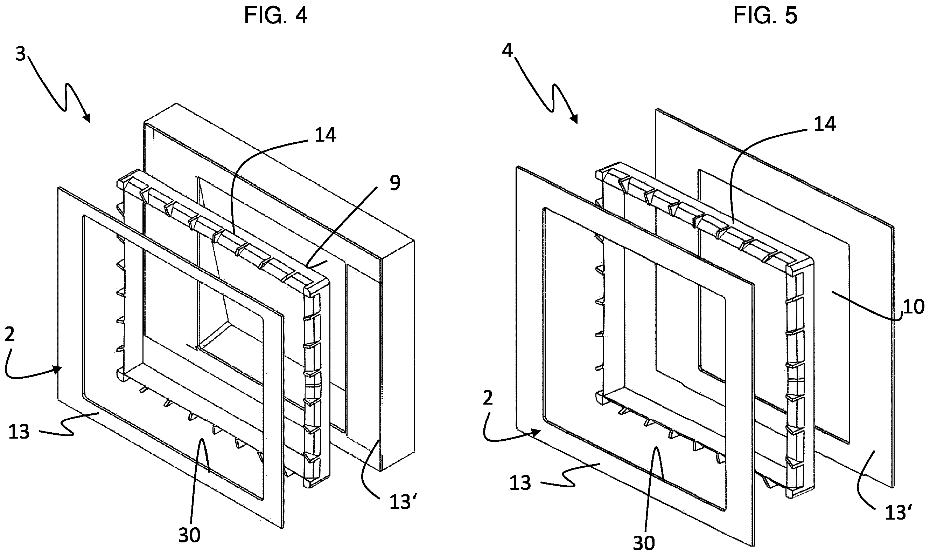

In Figur 4 wird die erste Rahmenanordnung 3 der Verkehrsüberwachungsanlage 1 und in Figur 5 die zweite Rahmenanordnung 4 der Verkehrsüberwachungsanlage 1 im Detail dargestellt. Wie schon zuvor erläutert, unterscheiden sich die Rahmenanordnung 3 und 4 im Wesentlichen nur darin, dass das Gehäusefunktionselement 9 der Rahmenanordnung 3 gegenüber einer äußeren Gehäusewandung 13 des Gehäuses 2 in einem Winkel angeordnet ist und das Gehäusefunktionselement 10 der Rahmenanordnung 4 parallel zu der äußeren Gehäusewandung 13 des Gehäuses 2 angeordnet ist.

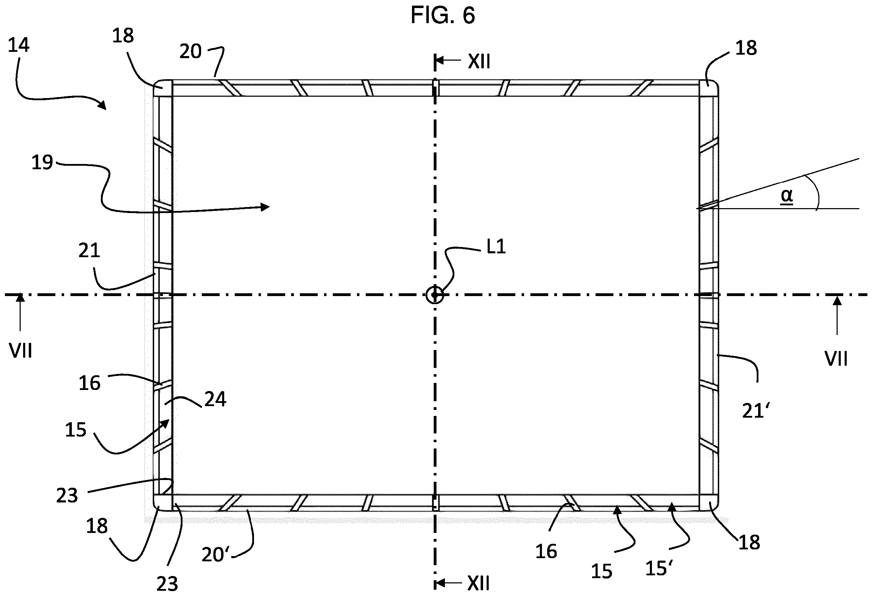

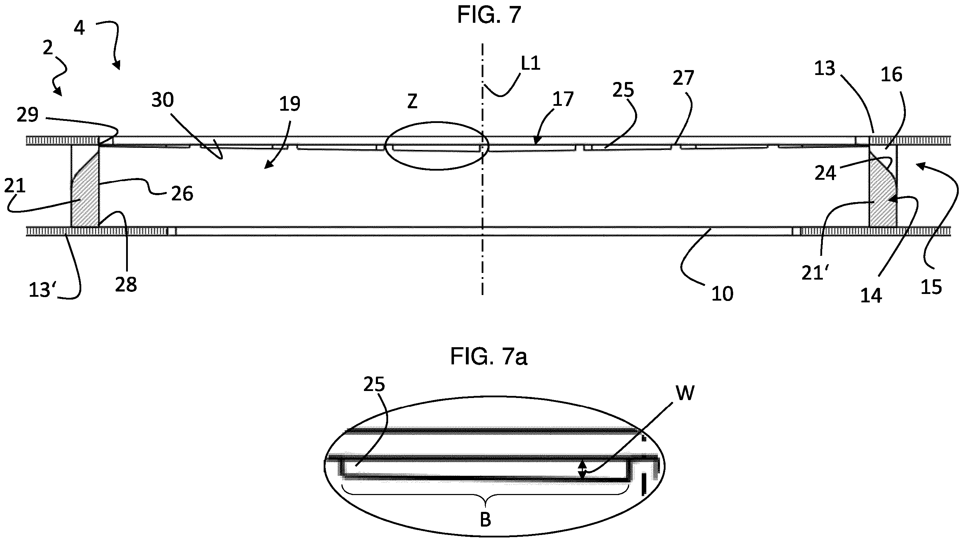

Der detaillierte Aufbau der Rahmenanordnungen 3, 4, 5 aus Figur 1 wird nachfolgend beispielhaft unter Bezugnahme auf die Figuren 5 bis 7 anhand der Rahmenanordnung 4 erläutert. Die Rahmenanordnung 4 umfasst ein Rahmenelement 14, das zwei parallel gegenüberliegende lange Schenkel 20, 20' und zwei gegenüberliegende kurze Schenkel 21, 21' umfasst. Die Schenkel 20, 20', 21, 21' sind im vorliegenden Fall im Wesentlichen gerade ausgeführt, wobei jeweils zwei aneinandergrenzende Seiten in einem rechten Winkel zueinander angeordnet sind.

Das Rahmenelement 14 weist eine Aussparung 19 auf, die einer Mittellinie L1 folgt und die entlang der Mittellinie L1 mit einem Querschnittsprofil in Form eines Vierecks mit geschlossenem Streckenzug ausgestaltet ist. Die Aussparung 19 ist durchgehend, sodass diese eine innere Öffnung 28 und äußere Öffnung 29 definiert, zwischen denen sich eine Begrenzungsfläche 26 des Rahmenelements 14 erstreckt. Die Mittellinie L1 liegt vorliegend im Schnittpunkt einer ersten Symmetrieebene VII-VII und einer zweiten Symmetrieebene XII-XII des Rahmenelementes 14. Die erste Symmetrieebene VII-VII schneidet die kurzen Schenkel 21, 21' in der Mitte ihrer Erstreckung und die zweite Symmetrieebene XII-XII schneidet die langen Schenkel 20, 20' in der Mitte ihrer Erstreckung.

Das Rahmenelement 14 ist zwischen der äußeren Gehäusewandung 13 und der inneren Gehäusewandung 13' des Gehäuses 2 angeordnet. Im vorliegenden Fall ist das Rahmenelement 14 reversibel über nicht dargestellte Befestigungselemente mit der inneren Gehäusewandung 13' verbunden. Alternativ ist auch denkbar, dass das Rahmenelement 14 in eine von der äußeren Gehäusewandung 13 und der inneren Gehäusewandung 13' integriert ist. Die innere Öffnung 28 der Aussparung 19 ist bezüglich der Mittellinie L1 in axialer Überdeckung mit dem Gehäusefunktionselement 10, das in der inneren Gehäusewandung 13' eingesetzt ist, angeordnet. Die äußere Öffnung 29 der Aussparung 19 ist bezüglich der Mittellinie L1 in axialer Überdeckung mit einer Gehäuseaussparung 30 der äußeren Gehäusewandung 13 angeordnet.

Das Rahmenelement 14 umfasst je Schenkel 20, 20', 21, 21' eine Mehrzahl von Luftleitelementen 16, die im vorliegenden Fall als Luftleitrippen ausgestaltet sind. Die Luftleitelemente 16 erstrecken sich von einer Anströmfläche 24 der Schenkel 20, 20', 21, 21'. Vorliegend erstrecken sich die Luftleitelemente 16 parallel zu der Mittellinie L1 von der jeweiligen Anströmfläche 24.

Zumindest eine Teilzahl der Luftleitelemente 16 ist in einem Winkel α zu der die Aussparung 19 begrenzenden Begrenzungsfläche 26 des Rahmenelementes 14 angeordnet, wobei der Winkel α abhängig vom Abstand des jeweiligen Luftleitelementes 16 von der Mitte des jeweiligen Schenkels 20, 20', 21, 21' ist. Der Winkel α nimmt dabei mit größer werdendem Abstand von der Mitte des jeweiligen Schenkels 20, 20', 21, 21' zu. Die Zunahme des Winkels α kann dabei einer linearen Funktion oder einer Funktion höheren Potenz folgen, wobei die Auslegung der Funktion anhand der geometrischen Zusammenhänge der Rahmenanordnung 4, insbesondere anhand der geometrischen Zusammenhänge des Rahmenelementes 14, erfolgen kann.

In den Schnittpunkten der einzelnen Schenkel 20, 20', 21, 21' weist das Rahmenelement 14 jeweils ein Eckabschnitt 18 auf. Der Eckabschnitt 18 umfasst dabei zwei Luftleitflächen 23.

Durch jeweils zwei Luftleitelemente 16, einen Teil der Anströmfläche 24 eines Schenkels 20, 20', 21, 21' und der äußeren Gehäusewandung 13 sind jeweils innere Luftleitkanälen 15 begrenzt. Des weiteren werden jeweils durch ein Luftleitelement 16, einen Eckabschnitt 18 und die äußere Gehäusewandung 13 äußere Luftleitkanäle 15' begrenzt. Ein Teil der äußeren Gehäusewandung 13 bildet somit eine Abdeckungsanordnung der Rahmenanordnung 4. Die Abdeckungsanordnung der Rahmenanordnung 4 ist somit vorliegend in die äußere Gehäusewandung 13 integriert. Es ist allerdings auch denkbar, dass die Abdeckungsanordnung separat ausgeführt ist und mit der äußeren Gehäusewandung 13 verbunden ist. Hierbei kommen alle lösbaren und unlösbaren Verbindungen in Betracht, wobei die Verbindung insbesondere dichtend ausgestaltet ist und/oder ein Dichtelement zwischen der äußeren Gehäusewandung 13 und der Abdeckungsanordnung eingebracht ist.

An den der Aussparung 19 zugewandten Enden der inneren Luftleitkanäle 15 und der äußeren Luftleitkanäle 15' ist je Schenkel 20, 20', 21, 21' einen Luftauslassschlitz 17 angeordnet, der sich im Wesentlichen von einem Ende des Schenkels 20, 20', 21, 21' bis zu dem anderen Ende des Schenkels 20, 20', 21, 21' erstreckt. Die Luftauslassschlitze 17 sind vorliegend zwischen dem Rahmenelement 14 und der äußeren Gehäusewandung 13, insbesondere dem Teil der Gehäusewandung 13, der als Abdeckungsanordnung der Rahmenanordnung 4 ausgestaltet ist, gebildet. Es ist allerdings auch denkbar, dass die Luftauslassschlitze 17 in das Rahmenelement 14 eingearbeitet sind. Die Luftauslassschlitze 17 sind an einer äußeren Funktionsseite des Gehäusefunktionselements 10 angeordnet. Als äußere Funktionsseite des Gehäusefunktionselements 10 soll dabei die Seite verstanden werden, die der Umwelt zugewandt ist, während als innere Funktionsseite des Gehäusefunktionselements 10 die Seite verstanden werden soll, die in Richtung des Inneren des Gehäuses gerichtet ist.

Die Luftauslassschlitze 17 umfassen jeweils Teilschlitze 25, die durch Stege 27 voneinander getrennt sind, sodass jeder Luftleitkanal 15, 15' von einem Teilschlitze 25 an seinem der Aussparung 19 zugewandten Ende begrenzt wird. Die Stege 27 sind im vorliegenden Fall in die Luftleitelementen 16 integriert. Es auch denkbar, dass die Stege 27 separat ausgeführt sind, wobei die Stege 27 einem von der Abdeckungsanordnung oder dem Rahmenelement 14 zugeordnet sein können. Im vorliegenden Fall sind die Luftauslassschlitze 17 der langen Schenkel 20, 20' in acht Teilschlitze 25 und die Luftauslassschlitze 17 der kurzen Schenkel 21, 21' in sieben Teilschlitze 25 unterteilt.

Die Luftauslassschlitze 17 weisen jeweils eine Schlitzweite W und eine Schlitzbreite B auf. Die Schlitzweite W nimmt von der Mitte eines Schenkels 20, 20', 21, 21' hin zu dessen Enden ab. Hierdurch kann der Luftaustritt in den Eckbereichen der Aussparung 19 gedrosselt und unerwünschte Verwirbelungen in den Eckbereichen minimiert werden. Es wird somit ein Luftstrom beziehungsweise ein Luftvorhang vor dem Gehäusefunktionselement 10 realisiert, der ein Abweisen von Wasser und Staub über die gesamte Oberfläche des Gehäusefunktionselements 10 ermöglicht. Die Schlitzweite W kann in Abhängigkeit des Abstandes von der Mitte des jeweiligen Schenkels ausgebildet sein, wobei die Schlitzweite W einer Funktion folgt, die abhängig von zumindest einem der Parameter Abstand von der Mitte des jeweiligen Schenkels, Schlitzbreite B oder Länge des jeweiligen Schenkels sein kann. Die Funktion kann dabei linear sein oder als Funktion höherer Potenz ausgebildet sein.

Die Luftleitkanäle 15, 15' sind mit dem Lufttransportraum 8 pneumatische verbunden, sodass von der Luftversorgungseinheit 7 bereitgestellte Druckluft über die Luftleitkanäle 15, 15' zu den Luftauslassschlitzen 17 gelangen kann. Die Druckluft tritt nachfolgend aus den Luftauslassschlitzen 17 aus, wobei die resultierende Luftströmung bezüglich der Aussparung 19 des Rahmenelementes 14 nach innen gerichtet ist. Insgesamt ergibt sich eine Luftströmung, die flächig oberhalb der Aussparung 19 wirkt.

Die Anströmflächen 24 sind vorliegend weitgehend linear ausgeführt, wobei grundsätzlich auch eine von linear abweichende Flächengestaltung zur Strömungsoptimierung denkbar ist. Die Anströmflächen 24 sind an ihrem der Aussparung 19 zugwandten Ende quer zu der Mittellinie L1 ausgerichtet, sodass die resultierende Luftströmung eine Wirkkomponente aufweist, die von dem Gehäusefunktionselement 10 weg gerichtet ist. Hierbei ergibt sich, wie zuvor beschrieben, ein Wirkzentrum in Überdeckung mit einem Mittenbereich des Gehäusefunktionselements 10.

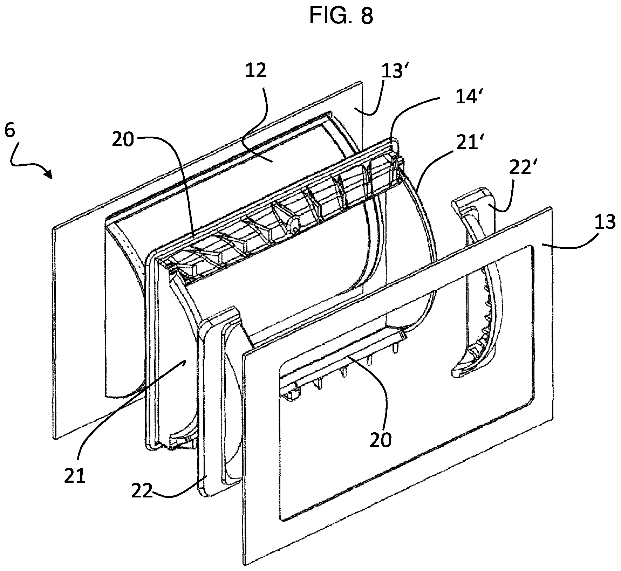

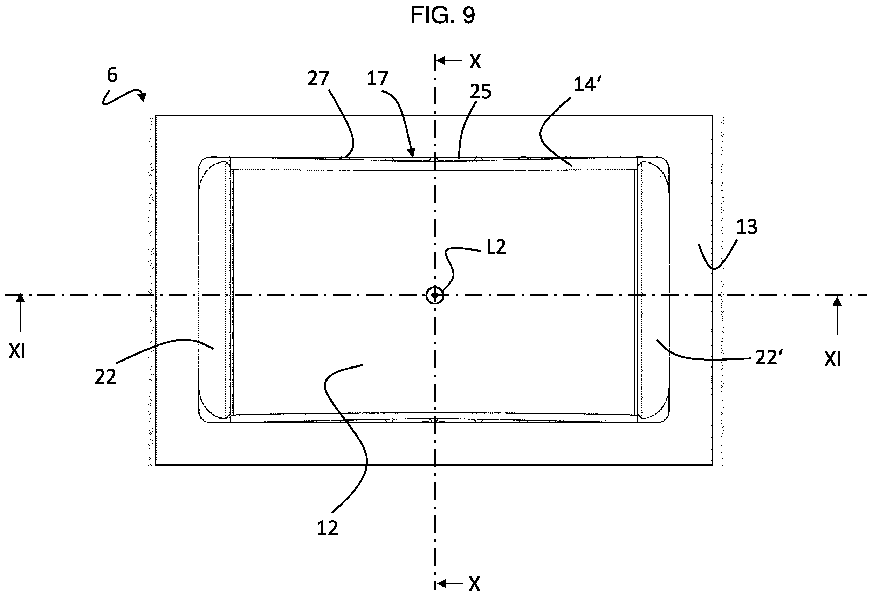

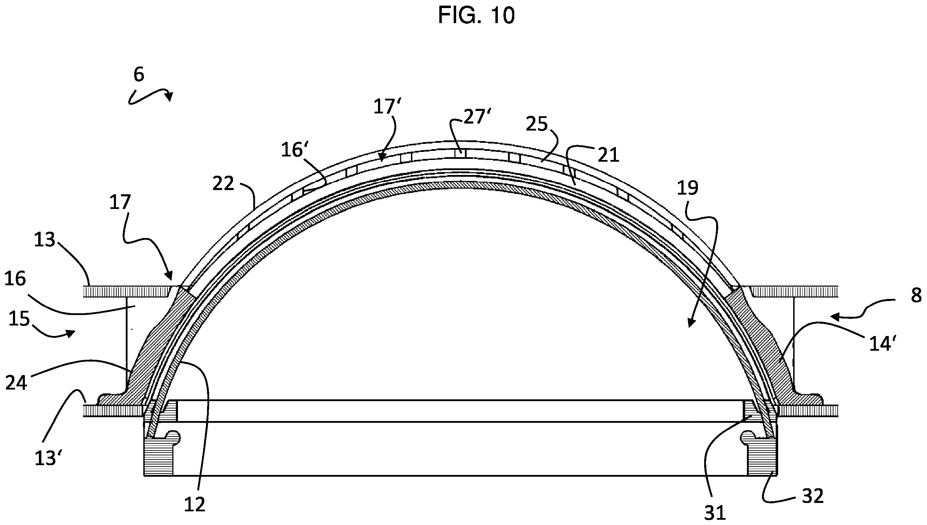

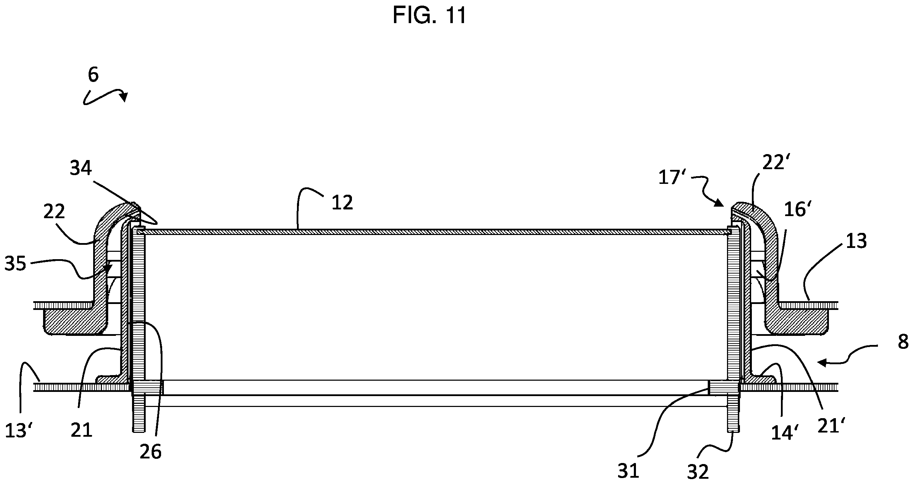

Figur 8 zeigt die Rahmenanordnung 6 aus Figur 1 in eine Detailansicht, die nachfolgend unter Bezugnahme auf die Figuren 8 bis 11 beschrieben wird. Die Rahmenanordnung 6 entspricht in weiten Teilen der zweiten Rahmenanordnung 4, auf deren Beschreibung insofern Bezug genommen wird. Dabei sind gleiche beziehungsweise einander entsprechende Einzelheiten mit gleichen Bezugszeichen versehen. Zur Vermeidung von Wiederholungen wird insbesondere auf die Unterschiede der vorliegenden Ausführungsform eingegangen, die im Wesentlichen durch die gekrümmte, rechteckige Ausgestaltung des Gehäusefunktionselementes 12 bedingt sind.

Die Rahmenanordnung 6 weist ein Rahmenelement 14' auf, das zwei parallel gegenüberliegende lange Schenkel 20, 20' und zwei parallel gegenüberliegende kurze Schenkel 21, 21' umfasst. Die langen Schenkel 20, 20' sind im vorliegenden Fall im Wesentlichen gerade ausgeführt. Die kurzen Schenkel 21, 21' sind gekrümmt ausgeführt und folgen der Krümmung des Gehäusefunktionselementes 12, wobei jeweils zwei aneinandergrenzende Seiten in einem rechten Winkel zueinander angeordnet sind.

Das Rahmenelement 14' weist eine Aussparung 19' auf, die einer Mittellinie L2 folgt und entlang der Mittellinie L2 mit einem Querschnittsprofil in Form eines Vielecks mit geschlossenem Streckenzug ausgestaltet ist, wobei sich vorliegend die vom Vieleck eingeschlossene Fläche entlang der Mittellinie L2 verändert. Die Aussparung 19' wird in ihrer Ausdehnung entlang der Mittellinie L2 durch die Höhe der langen Schenkel 20, 20' definiert. Die kurzen Schenkel 21, 21' ragen über die Aussparung 19' hinaus. Die Aussparung 19' ist durchgehend, sodass die Aussparung 19' eine innere Öffnung 28' und eine äußere Öffnung 29' definiert sind, zwischen denen sich eine Begrenzungsfläche 26' erstreckt. Die Mittellinie L2 liegt vorliegend im Schnittpunkt einer ersten Symmetrieebene X-X und einer zweiten Symmetrieebene XI-XI des Rahmenelementes 14'. Die erste Symmetrieebene X-X schneidet die langen Schenkel 20, 20' in der Mitte ihrer Erstreckung und die zweite Symmetrieebene XI-XI schneidet die kurzen Schenkel 21, 21' in der Mitte ihrer Erstreckung.

Das Rahmenelement 14' ist zwischen der äußeren Gehäusewandung 13 und der inneren Gehäusewanderung 13' des Gehäuses angeordnet. Das Gehäusefunktionselement 12 ist an einem Aufnahmeabschnitt 32 des Gehäuses 2 befestigt und erstreckt sich durch eine Dichtungsanordnung 31 in der inneren Gehäusewandung 13'. Das Gehäusefunktionselement 12 ragt durch die Aussparung 19' des Rahmenelements 14' hindurch, sodass das Gehäusefunktionselement 12 von der inneren Öffnung 28' und der äußeren Öffnung 29' der Aussparung 19' umschlossen wird.

Das Rahmenelement 14' umfasst an den langen Schenkeln 20, 20' eine Mehrzahl von Luftleitelementen 16, die im vorliegenden Fall als Luftleitrippen ausgestaltet sind. Die Luftleitelemente erstrecken sich von einer Anströmfläche 24 der langen Schenkel 20, 20'. Vorliegend erstrecken sich die Luftleitelemente 16 parallel zu der Mittellinie L2 von der Anströmfläche 24.

Das Rahmenelement 14' weist an den kurzen Schenkeln 21, 21' keine Luftleitelemente auf. Stattdessen ist die Anströmfläche 24' der kurzen Schenkel 21, 21' durchgehend ausgeführt.

Durch jeweils zwei Luftleitelemente 16, einen Teil der Anströmfläche 24 eines langen Schenkels 20, 20' und der äußeren Gehäusewandung 13 sind jeweils Luftleitkanäle 15 begrenzt. Ein Teil der äußeren Gehäusewandung 13 bildet somit einen ersten Teil einer Abdeckungsanordnung 33 der Rahmenanordnung 4. Der erste Teil der Abdeckungsanordnung 33 der Rahmenanordnung 4 ist somit vorliegend in die äußere Gehäusewandung 13 integriert. Es ist allerdings auch denkbar, dass dieser erste Teil der Abdeckungsanordnung separat ausgeführt ist und mit der äußeren Gehäusewandung 13 verbunden ist. Hierbei kommen alle lösbaren und unlösbaren Verbindungen in Betracht, wobei die Verbindung insbesondere dichtend ausgestaltet ist und/oder ein Dichtelement zwischen der äußeren Gehäusewandung 13 und dem ersten Teil der Abdeckungsanordnung eingebracht ist.

Die Abdeckungsanordnung 33 umfasst vorliegend darüber hinaus ein erstes Deckelelement 22 und ein zweites Deckelelement 22', die ebenfalls zwischen der äußeren Gehäusewandung 13 und der inneren Gehäusewandung 13' angeordnet sind und mit einem von der äußeren Gehäusewandung 13 und der inneren Gehäusewandung 13' lösbar verbunden sind. Die beiden Deckelelement 22, 22' weisen Luftleitelemente 16' auf, von denen zumindest eine Teilzahl analog zu den Luftleitelementen 16 in einem Winkel α zu der Begrenzungsfläche 26' der Aussparung 19' angeordnet ist. Zur Vermeidung von Wiederholungen wird an dieser Stelle auf die voranstehende detaillierte Erläuterung zu der Anordnung der Luftleitelemente 16 der zweiten Rahmenanordnung 4 verwiesen, die analog für die vierte Rahmenanordnung 6 gelten. Die beiden Deckelelemente 22, 22' weisen zwischen den Luftleitelementen 16' Luftführungsflächen 34 auf.

Das erste Deckelelement 22 ist bezüglich der Mittellinie L2 in axialer Überdeckung mit dem kurzen Schenkel 21 angeordnet und das zweite Deckelelement 22' ist in axialer Überdeckung mit dem kurzen Schenkel 21' angeordnet. Je kurzem Schenkel 21, 21' werden durch jeweils zwei Luftleitelemente 16', einen Teil der Anströmfläche 24' des jeweiligen Schenkels 21, 21' und einem von dem ersten Deckelelement 22 und dem zweiten Deckelelement 22' jeweils Luftleitkanäle 35 begrenzt.

An den der Aussparung 19' zugewandten Enden der Luftleitkanäle 15 der langen Schenkel 20, 20' ist ein Luftauslassschlitz 17 angeordnet. Die Luftauslassschlitze 17 sind vorliegend zwischen dem Rahmenelement 14' und der äußeren Gehäusewandung 13 gebildet. Die Luftauslassschlitze 17 umfassen jeweils Teilschlitze 25 die durch Stege 27 voneinander getrennt sind, sodass jeder Luftleitkanal 15 von einem Teilschlitz 25 an dem der Aussparung 19' zugewandten Ende begrenzt wird.

An den der Aussparung 19' zugewandten Enden der Luftleitkanäle 35 der kurzen Schenkel 21, 21' ist ein Luftauslassschlitz 17' angeordnet. Die Luftauslassschlitze 17' folgen dabei der Krümmung der jeweils zugeordneten gekrümmten Kante des Gehäusefunktionselements12. Die Luftauslassschlitze 17' sind zwischen einem Deckelelement 22, 22' und dem Rahmenelement 14' gebildet. Die Luftauslassschlitze 17' umfassen jeweils Teilschlitze 25' die durch Stege 27' voneinander getrennt sind, sodass der Luftleitkanal 35 von einem Teilschlitz 25' an dem der Aussparung 19' zugewandten Ende begrenzt wird.

Die Luftauslassschlitze 17, 17' weisen jeweils eine Schlitzweite W und eine Schlitzbreite B auf. Die Schlitzweite W nimmt von der Mitte des jeweiligen Schenkels 20, 20', 21, 21' hin zu dessen Ende ab. Auch an dieser Stelle wird zum Vermeidung von Wiederholungen auf die voranstehenden Ausführungen bezüglich der Schlitzweite W der zweiten an Rahmenanordnung 4 verwiesen, die analog für die zweite Rahmenanordnung 6 gelten.

Die Luftleitkanäle 15, 35 sind mit dem Lufttransportraum 8 pneumatische verbunden, sodass von der Luftversorgungseinheit 7 bereitgestellte Druckluft über die Luftleitkanäle 15, 35 zu den Auslassschlitzen 17, 17' gelangen kann. Die Druckluft tritt nachfolgend aus den Luftauslassschlitze 17, 17' aus, wobei die resultierende Luftströmung bezüglich der Aussparung 19' des Rahmenelementes 14' nach innen gerichtet ist. Insgesamt ergibt sich so eine Luftströmung, die flächig oberhalb der Aussparung 19' wirkt.

Die Anströmfläche 24 der langen Schenkel 20, 20' ist von linear verschieden ausgeführt. Die Anströmflächen 24 sind an ihrem der Aussparung 19' zugewandten Ende quer zu der Mittellinie L2 ausgerichtet, sodass die resultierende Luftströmung im Wesentlichen der Krümmung des Gehäusefunktionselements 12 folgt.

Die Anströmflächen 24' der kurzen Schenkel 21, 21' sind gebogen ausgeführt und an ihrem der Aussparung 19' zugewandten Ende quer zu der Mittellinie L2 ausgerichtet. Die Luftführungsflächen 34 der Deckelelement 22, 22' sind ebenfalls gebogen ausgeführt und sind an ihrem der Aussparung 19' zugewandten Ende quer zu der Mittellinie L2 ausgerichtet. Die Biegung der Luftführungsflächen 34 folgt im Wesentlichen der Biegung der Anströmflächen 24'. Die aus den Luftauslassschlitzen 17' austretende Luftströmung ist zumindest mit einer Wirkkomponente von dem Gehäusefunktionselement 12 weg gerichtet. Insgesamt ergibt sich somit über der Außenfläche des Gehäusefunktionselements 12 eine Luftströmung mit einem Wirkzentrum in Überdeckung mit einem Mittenbereich des Gehäusefunktionselements 12.

### Bezugszeichenliste

- 1: Verkehrsüberwachungsanlage
- 2: Gehäuse
- 3: Rahmenanordnung
- 4: Rahmenanordnung
- 5: Rahmenanordnung
- 6: Rahmenanordnung
- 7: Luftversorgungseinheit
- 8, 8': Lufttransportraum
- 9: Gehäusefunktionselement
- 10: Gehäusefunktionselement
- 11: Gehäusefunktionselement
- 12: Gehäusefunktionselement
- 13, 13': Gehäusewandung
- 14, 14': Rahmenelement
- 15, 15': Luftleitkanal
- 16, 16': Luftleitelement
- 17, 17': Luftauslassschlitz
- 18: Eckabschnitt
- 19, 19': Aussparung
- 20, 20': Langer Schenkel
- 21, 21': kurzer Schenkel
- 22, 22': Deckelelement
- 23, 23': Luftleitflächen
- 24, 24`: Anströmfläche
- 25, 25': Teilschlitz
- 26, 26`: Begrenzungsfläche
- 27, 27': Steg
- 28, 28': Innere Öffnung
- 29, 29': Äußeren Öffnung
- 30: Gehäuseaussparung
- 31: Dichtungsanordnung
- 32: Aufnahmeabschnitt
- 33: Abdeckungsanordnung
- 34: Luftführungsfläche
- 35: Luftleitkanal

- L: Mittellinie
- α: Winkel

## Patentansprüche

1. Rahmenanordnung zum Abweisen von Partikeln von einer Oberfläche eines Gehäusefunktionselements, insbesondere für Gehäuse von Verkehrsüberwachungsanlagen, umfassend:
mehrere einen Rahmen (14, 14') bildende Schenkel (20, 20', 21, 21'), die in Form eines Vielecks mit geschlossenem Streckenzug angeordnet sind und eine Öffnung (19, 19') umschließen,
ein Gehäusefunktionselement (9, 10, 11, 12), das von dem Rahmen (14, 14') umschlossen ist, **gekennzeichnet durch**
je Schenkel (20, 20', 21, 21') einen nach innen gerichteten Luftauslassschlitz (17, 17'), wobei eine Schlitzweite (W) zumindest eines der Schenkel (20, 20', 21, 21') von der Mitte hin zu beiden Enden des Schenkels (20, 20', 21, 21') abnimmt.

2. Rahmenanordnung nach Anspruch 1,
**dadurch gekennzeichnet,**
**dass** die Schlitzweite (W) zumindest zweier aneinander angrenzender Schenkel (20, 20', 21, 21') von der Mitte hin zu beiden Enden des jeweiligen Schenkels (20, 20', 21, 21') abnimmt.

3. Rahmenanordnung nach einem der Ansprüche 1 oder 2,
**dadurch gekennzeichnet,**
**dass** die Schlitzweite (W) zumindest aller Schenkel (20, 20', 21, 21') von der Mitte hin zu beiden Enden des jeweiligen Schenkels (20, 20', 21, 21') abnimmt.

4. Rahmenanordnung nach einem der Ansprüche 1 bis 3,
**dadurch gekennzeichnet,**
**dass** die Luftauslassschlitze (17, 17') jeweils eine Schlitzweite (W) in Abhängigkeit ihres Abstands von einer Mitte des jeweiligen Schenkels (20, 20', 21, 21') aufweisen.

5. Rahmenanordnung nach einem der Ansprüche 1 bis 4,
**dadurch gekennzeichnet,**
**dass** die Luftauslassschlitze (17, 17') entlang der jeweiligen Schenkel (20, 20', 21, 21') in Teilschlitze (25, 25') aufgeteilt sind.

6. Rahmenanordnung nach Anspruch 5,
**dadurch gekennzeichnet,**
**dass** die Teilschlitze (25, 25') jeweils an einem Ende eines Luftleitkanals (15, 15', 35) angeordnet sind.

7. Rahmenanordnung nach Anspruch 6,
**dadurch gekennzeichnet,**
**dass** der Luftleitkanal (15, 15', 35) zumindest teilweise durch zwei Luftleitelemente (16, 16'), insbesondere Luftleitrippen, begrenzt ist.

8. Rahmenanordnung nach einem der Ansprüche 6 oder 7,
**dadurch gekennzeichnet,**
**dass** der Luftleitkanal (15, 15', 35) zumindest teilweise durch eine Abdeckungsanordnung (33) begrenzt ist.

9. Rahmenanordnung nach einem der Ansprüche 7 oder 8,
**dadurch gekennzeichnet,**
**dass** die Luftleitelemente (16, 16') quer zu einer die Öffnung (19, 19') begrenzenden Fläche (26, 26') des Rahmens (14, 14') ausgerichtet sind, wobei die Luftleitelemente (16, 16') insbesondere in einem Winkel (α) zu der die Öffnung (19, 19') begrenzenden Fläche (26, 26') des Rahmens (14, 14') angeordnet sind, wobei der Winkel (α) abhängig vom Abstand des jeweiligen Luftleitelementes (16, 16') von der Mitte des jeweiligen Schenkels (20, 20', 21, 21') ist.

10. Rahmenanordnung nach einem der Ansprüche 1 bis 9,
**dadurch gekennzeichnet,**
**dass** die Luftauslassschlitze (17, 17') an einer äußeren Funktionsseite des Gehäusefunktionselements (9, 10, 11, 12) angeordnet sind, und/oder
**dass** der Rahmen (14, 14') an zumindest einem Schenkel (20, 20', 21, 21') einen Reinigungsschlitz aufweist, wobei der Reinigungsschlitz an einer inneren Funktionsseite des Gehäusefunktionselements (9, 10, 11, 12) angeordnet ist.

11. Rahmenanordnung nach einem der Ansprüche 1 bis 10,
**dadurch gekennzeichnet,**
**dass** das Gehäusefunktionselement (9, 10, 11, 12) eine viereckige Außenkontur aufweist und gekrümmt ausgestaltet ist,
wobei zwei parallele Kanten des Gehäusefunktionselements (9, 10, 11, 12) gerade sind und
zwei weitere Kanten des Gehäusefunktionselements (9, 10, 11, 12) eine Krümmung, insbesondere eine konstante Krümmung, aufweisen.

12. Rahmenanordnung nach Anspruch 11,
**dadurch gekennzeichnet,**
**dass** die Luftauslassschlitze (17, 17') jeweils der zwei Schenkel (20, 20', 21, 21') des Rahmens (14, 14'), die den gekrümmten Kanten des Gehäusefunktionselements (9, 10, 11, 12) zugeordnet sind, der Krümmung der jeweils zugeordneten Kante folgen.

13. Gehäuseanordnung, insbesondere für Verkehrsüberwachungsanlagen, umfassend:
eine Rahmenanordnung (3, 4, 5, 6) nach einem der Ansprüche 1 bis 12,
ein Gehäuse (2), in das die Rahmenanordnung (3, 4, 5, 6) eingesetzt ist, und
eine Luftversorgungseinheit (7), mittels der Druckluft durch die Luftauslassschlitze (17, 17') der Rahmenanordnung (3, 4, 5, 6) förderbar ist.

14. Gehäuseanordnung nach Anspruch 13,
**dadurch gekennzeichnet,**
**dass** die Luftauslassschlitze (17, 17') entlang der jeweiligen Schenkel (20, 20', 21, 21') in Teilschlitze (25, 25') aufgeteilt sind, wobei die Teilschlitze (25, 25') jeweils an einem Ende eines Luftleitkanals (15, 15', 35) angeordnet sind, und
**dass** jeweils einer der Luftleitkanäle (15, 15', 35) zwischen einem der Luftauslassschlitze (17, 17') und der Luftversorgungseinheit (7) angeordnet ist, wobei der Luftleitkanal (15, 15', 35), insbesondere über eine Kühlstrecke, mit der Luftversorgungseinheit (7) pneumatische verbunden ist.

15. Gehäuseanordnung nach Anspruch 14,
**dadurch gekennzeichnet,**
**dass** die Rahmenanordnung (3, 4, 5, 6) reversibel lösbar von dem restlichen Gehäuse (2) ausgestaltet ist, oder
**dass** die Rahmenanordnung (3, 4, 5, 6) in das restliche Gehäuse (2) integriert ist.

## Claims

1. Frame arrangement for deflecting particles from a surface of a housing functional element, in particular for housings of traffic monitoring equipment, comprising:
a plurality of legs (20, 20', 21, 21') forming a frame (14, 14'), which are arranged in the form of a polygon with a closed stretch and are delimiting an opening (19, 19'),
a housing functional element (9, 10, 11, 12) enclosed by the frame (14, 14'),
**characterized in that**
each leg (20, 20', 21, 21') has an inwardly directed air outlet slot (17, 17'), wherein a slot width (W) of at least one of the legs (20, 20', 21, 21') decreases from the center toward both ends of the leg (20, 20', 21, 21').

2. Frame arrangement according to claim 1,
**characterized in**
**that** the slot width (W) of at least two adjacent legs (20, 20', 21, 21') decreases from the center towards both ends of the respective leg (20, 20', 21, 21').

3. Frame arrangement according to one of claims 1 or 2,
**characterized in**
**that** the slot width (W) of at least all legs (20, 20', 21, 21') decreases from the center towards both ends of the respective leg (20, 20', 21, 21').

4. Frame arrangement according to one of claims 1 to 3,
**characterized in**
**that** the air outlet slots (17, 17') each have a slot width (W) as a function of their distance from a center of the respective leg (20, 20', 21, 21').

5. Frame arrangement according to any one of claims 1 to 4,
**characterized in**
**that** the air outlet slots (17, 17') are divided into sub-slots (25, 25') along the respective legs (20, 20', 21, 21').

6. Frame arrangement according to claim 5,
**characterized in**
**that** the sub-slots (25, 25') are each arranged at one end of an air guiding channel (15, 15', 35).

7. Frame arrangement according to claim 6,
**characterized in**
**that** the air guiding channel (15, 15', 35) is at least partially delimited by two air guiding elements (16, 16'), in particular air guiding ribs.

8. Frame arrangement according to one of claims 6 or 7,
**characterized in**
**that** the air guiding channel (15, 15', 35) is at least partially delimited by a cover arrangement (33).

9. Frame arrangement according to one of claims 7 or 8,
**characterized in**
**that** the air guiding elements (16, 16') are orientated transversely to a surface (26, 26') of the frame (14, 14') delimiting the opening (19, 19'), wherein the air guiding elements (16, 16') are arranged in particular at an angle (α) to the surface (26, 26') of the frame (14, 14') delimiting the opening (19, 19'), wherein the angle (α) is dependent on the distance of the respective air guiding element (16, 16') from the center of the respective leg (20, 20', 21, 21').

10. Frame arrangement according to one of claims 1 to 9,
**characterized in**
**that** the air outlet slots (17, 17') are arranged on an outer functional side of the housing functional element (9, 10, 11, 12), and/or
**that** the frame (14, 14') has a cleaning slot on at least one leg (20, 20', 21, 21'), wherein the cleaning slot is arranged on an inner functional side of the housing functional element (9, 10, 11, 12).

11. Frame arrangement according to one of claims 1 to 10,
**characterized in**
**that** the housing functional element (9, 10, 11, 12) has a quadrangular outer contour and is curved,
wherein two parallel edges of the housing functional element (9, 10, 11, 12) are straight, and
two further edges of the housing functional element (9, 10, 11, 12) have a curvature, in particular a constant curvature.

12. Frame arrangement according to claim 11,
**characterized in**
**that** the air outlet slots (17, 17') of each of the two legs (20, 20', 21, 21') of the frame (14, 14') associated with the curved edges of the housing functional element (9, 10, 11, 12) follow the curvature of the respective associated edge.

13. Housing arrangement, especially for traffic monitoring equipment, comprising:
a frame arrangement (3, 4, 5, 6) according to one of claims 1 to 12,
a housing (2) in which the frame arrangement (3, 4, 5, 6) is inserted, and
an air supply unit (7) with which compressed air can be conveyed through the air outlet slots (17, 17') of the frame arrangement (3, 4, 5, 6).

14. Housing arrangement according to claim 13,
**characterized in**
**that** the air outlet slots (17, 17') are divided along the respective legs (20, 20', 21, 21') into sub-slots (25, 25'), wherein the sub-slots (25, 25') each are arranged at one end of an air guiding channel (15, 15', 35), and
**that** one of the air guiding channels (15, 15', 35) is arranged between one of the air outlet slots (17, 17') and the air supply unit (7), wherein the air guiding channel (15, 15', 35) is pneumatically connected to the air supply unit (7), in particular via a cooling path.

15. Housing arrangement according to claim 14,
**characterized in**
**that** the frame arrangement (3, 4, 5, 6) is reversibly detachable from the rest of the housing (2), or
**that** the frame arrangement (3, 4, 5, 6) is integrated into the rest of the housing (2).

## Revendications

1. Dispositif de cadre permettant de dévier des particules d'une surface d'un élément fonctionnel de boîtier, en particulier pour boîtiers d'installations de contrôle de la circulation, comprenant :
plusieurs branches (20, 20', 21, 21') formant un cadre (14, 14'), qui sont disposées sous la forme d'un polygone avec un tracé fermé et entourent une ouverture (19, 19'),
un élément fonctionnel de boîtier (9, 10, 11, 12), qui est entouré par le cadre (14, 14'), **caractérisé par**
une fente de sortie d'air (17, 17') dirigée vers l'intérieur pour chaque branche (20, 20', 21, 21'), sachant qu'une largeur de fente (W) d'au moins une des branches (20, 20', 21, 21') diminue du centre vers les deux extrémités de la branche (20, 20',21,21').

2. Dispositif de cadre selon la revendication 1, **caractérisé en ce que**
la largeur de fente (W) au moins des deux branches voisines l'une de l'autre (20, 20', 21, 21') diminue du centre vers les deux extrémités de la branche respective (20, 20', 21, 21').

3. Dispositif de cadre selon l'une quelconque des revendications 1 ou 2,
**caractérisé en ce que**
la largeur de fente (W) d'au moins toutes les branches (20, 20', 21, 21') diminue du centre vers les deux extrémités de la branche respective (20, 20', 21, 21').

4. Dispositif de cadre selon l'une quelconque des revendications 1 à 3,
**caractérisé en ce que**
les fentes de sortie d'air (17, 17') comportent respectivement une largeur de fente (W) en fonction de leur distance d'un centre de la branche respective (20, 20', 21, 21').

5. Dispositif de cadre selon l'une quelconque des revendications 1 à 4,
**caractérisé en ce que**
les fentes de sortie d'air (17, 17') sont subdivisées en fentes partielles (25, 25') le long des branches respectives (20, 20', 21, 21').

6. Dispositif de cadre selon la revendication 5, **caractérisé en ce que**
les fentes partielles (25, 25') sont disposées respectivement à une extrémité d'un conduit d'air (15, 15', 35).

7. Dispositif de cadre selon la revendication 6, **caractérisé en ce que**
le conduit d'air (15, 15', 35) est limité au moins en partie par deux éléments conducteurs d'air (16, 16'), en particulier des nervures de conduite d'air.

8. Dispositif de cadre selon l'une quelconque des revendications 6 ou 7,
**caractérisé en ce que**
le conduit d'air (15, 15', 35) est limité au moins en partie par un dispositif de couverture (33).

9. Dispositif de cadre selon l'une quelconque des revendications 7 ou 8,
**caractérisé en ce que**
les éléments de conduite d'air (16, 16') sont orientés transversalement à une surface (26, 26') délimitant l'ouverture (19, 19') du cadre (14, 14'), sachant que les éléments de conduite d'air (16, 16') sont disposés en particulier dans un angle (a) par rapport à la surface (26, 26') délimitant l'ouverture (19, 19') du cadre (14, 14'), sachant que l'angle (a) est fonction de la distance de l'élément de conduite d'air (16, 16') respectif du centre de la branche respective (20, 20', 21,21').

10. Dispositif de cadre selon l'une quelconque des revendications 1 à 9,
**caractérisé en ce que**
les fentes de sortie d'air (17, 17') sont disposées sur un côté fonctionnel extérieur de l'élément fonctionnel de boîtier (9, 10, 11, 12), et/ou
**en ce que** le cadre (14, 14') comporte sur au moins une branche (20, 20', 21, 21') une fente de nettoyage, sachant que la fente de nettoyage est disposée sur un côté fonctionnel intérieur de l'élément fonctionnel de boîtier (9, 10, 11, 12).

11. Dispositif de cadre selon l'une quelconque des revendications 1 à 10,
**caractérisé en ce que**
l'élément fonctionnel de boîtier (9, 10, 11, 12) comporte un contour extérieur quadrangulaire et est conçu courbé,
sachant que deux bords parallèles de l'élément fonctionnel de boîtier (9, 10, 11, 12) sont droits, et
sachant que d'autres bords de l'élément fonctionnel de boîtier (9, 10, 11, 12) comportent une courbure, en particulier une courbure constante.

12. Dispositif de cadre selon la revendication 11, **caractérisé en ce que**
les fentes de sortie d'air (17, 17'), respectivement des deux branches (20, 20', 21, 21') du cadre (14, 14'), qui sont attribuées aux bords courbés de l'élément fonctionnel de boîtier (9, 10, 11, 12), suivent la courbure des bords respectivement attribués.

13. Dispositif de boîtier, en particulier pour des installations de contrôle de la circulation comprenant :
un dispositif de cadre (3, 4, 5, 6) selon l'une quelconque des revendications 1 à 12,
un boîtier (2) dans lequel le dispositif de cadre (3, 4, 5, 6) est inséré, et
une unité d'alimentation d'air (7) au moyen de laquelle de l'air comprimé peut être transporté à travers les fentes de sortie d'air (17, 17') du dispositif de cadre (3, 4, 5, 6).

14. Dispositif de boîtier selon la revendication 13, **caractérisé en ce que**
les fentes de sortie d'air (17, 17') sont réparties en fentes partielles (25, 25') le long de la branche respective (20, 20', 21, 21'), sachant que les fentes partielles (25, 25') sont disposées respectivement à une extrémité d'un conduit d'air (15, 15', 35), et
**en ce que** respectivement un des conduits d'air (15, 15', 35) est disposé entre une des fentes de sortie d'air (17, 17') et l'unité d'alimentation d'air (7), sachant que le conduit d'air (15, 15', 35) en particulier sur une distance de refroidissement, est pneumatiquement relié à l'unité d'alimentation d'air (7) .

15. Dispositif de boîtier selon la revendication 14, **caractérisé en ce que**
le dispositif de cadre (3, 4, 5, 6) est conçu amovible de façon réversible du reste du boîtier (2), ou
**en ce que** le dispositif de cadre (3, 4, 5, 6) est intégré dans le reste du boîtier (2).
